# EUROPÄISCHE PATENTANMELDUNG

(11) **EP 0 593 412 A1**
(43) Veröffentlichungstag der Anmeldung: **20.04.1994**
(21) Anmeldenummer: 93890199.8
(22) Anmeldetag: 12.10.1993
(51) Int. Cl.: B27J 1/00, B65G 47/14

(54) **Vorrichtung zum Zuführen von im wesentlichen parallel ausgerichtetem Schilfrohr zu einer Schilfrohrverarbeitungsmaschine, beispielsweise einer Maschine für die Herstellung von Schilfrohrmatten**

(30) Priorität: 12.10.1992 AT 2003/92
(71) Anmelder: REEDEX SCHILFVERWERTUNG Gesellschaft m.b.H., A-7000 Eisenstadt (AT)
(72) Erfinder: Hinterleitner, Johann Paul, A-7100 Neusiedl am See (AT)
(74) Vertreter: Brauneiss, Leo, Dipl.Ing.

(57) **Zusammenfassung**

Eine Vorrichtung zum Zuführen einzelner Schilfrohre (3) zu einer Schilfrohrverarbeitungsmaschine (1) weist zu beiden Seiten dieser Maschine (1) Abstützungen (2) für Schilfrohrbündel auf. Jede Abstützung (2) besteht aus zwei in Schilfrohrlängsrichtung beabstandeten Teilen (4,5). Der Teil (5) weist im Bodenbereich einen Entnahmeschlitz (8) für einzelne Schilfrohre auf, der sich nach unten in einen Portionierraum (9) fortsetzt. Der Entnahmeschlitz (8) ist durch ein erstes Verschlußorgan verschließbar, der Portionierraum (9) durch ein zweites Verschlußorgan. Das im Portionierraum (9) befindliche Schilfrohrende wird durch eine auf-und abbewegbare erste Klemmeinrichtung (27) erfaßt und nach unten bewegt, wo es durch eine zweite Klemmeinrichtung (32) erfaßt und seitlich aus der Abstützung herausgezogen wird.

## Beschreibung

Die Erfindung betrifft eine Vorrichtung zum Zuführen von im wesentlichen parallel ausgerichtetem Schilfrohr zu einer Schilfrohrverarbeitungsmaschine, beispielsweise einer Maschine für die Herstellung von Schilfrohrmatten, mit wenigstens einer aus zwei in Schilfrohrlängsrichtung beabstandeten Teilen bestehenden Abstützung für ein Schilfrohrbündel, von welchen Teilen einer im Bodenbereich einen Entnahmeschlitz für einzelne Schilfrohre aufweist, der sich in einen nach unten gerichteten Portionierraum fortsetzt, und mit einer Einrichtung zum Transportieren einzelner Schilfrohre zur Schilfrohrverarbeitungsmaschine.

Bei der Herstellung von Schilfrohrmatten oder ähnlichen aus Schilfrohr bestehenden Produkten ist es erforderlich, das Schilfrohr einzeln, bei geringem Rohrdurchmesser gegebenenfalls zwei Schilfrohre zusammen, einer Verarbeitungsmaschine zuzuführen, die das vereinzelt zugeführte Schilfrohr mittels Drähten verbindet. Derartige Schilfrohrverarbeitungsmaschinen sind bereits seit langem bekannt. Die Zufuhr der einzelnen Schilfrohre zu solchen Maschinen bereitet jedoch deshalb große Schwierigkeiten, da das maschinell geerntete Schilfrohr in einem Bündel vorliegt, wo die einzelnen Rohre kreuz und quer durcheinander liegen und sich gegenseitig verhaken, so daß sie schwer vereinzelt werden können. Durch die Ernte des Schilfrohres mittels Großmaschinen werden weiters die Rizome desselben verletzt, so daß das Schilfrohr im unteren Bereich starke Knicke aufweist, die bis zu 45° betragen können und das gegenseitige Verhaken begünstigen. Weiters wird häufig das Schilfrohr durch Insektenbefall, den sogenannten Rohrbohrer, verletzt, wodurch Seitentriebe entstehen, die gleichfalls ein Vereinzeln der Schilfrohre wesentlich erschweren.

Aus diesem Grunde wurden bisher in der Regel die einzelnen Schilfrohre der Verarbeitungsmaschine händisch zugeführt, was jedoch einen großen, eintönigen Arbeitsaufwand bedingt.

Aus der DE-OS 2 237 534 ist bereits eine Vorrichtung zum Portionieren von Schilfrohr bekannt geworden, bei welcher der das Schilfrohr aufnehmende langgestreckte Behälter stirnseitig sowie an den daran angrenzenden Teilen der Seitenwände und des Bodens eine Ausnehmung aufweist, in die ein quer zur Behälterlängsachse verschiebbarer Keil einführbar ist, durch den ein Teil des im Behälter befindlichen Schilfrohres vom übrigen Behälterinhalt abgetrennt wird. Dieser abgetrennte Teil wird in der Folge durch eine Greifvorrichtung erfaßt und in Richtung der Behälterlängsachse über die Ausnehmung aus dem Behälter herausgezogen. Mit dieser bekannten Vorrichtung ist es nur möglich, eine größere Anzahl von Schilfrohren gleichzeitig aus dem Behälter zu entfernen, eine Vereinzelung ist somit nicht möglich. Des weiteren besteht insbesondere bei starke Knicke aufweisendem und dadurch gegenseitig verhaktem Schilfrohr die Gefahr einer Beschädigung desselben durch den in den im Behälter befindlichen Schilfrohrstapel eingeschobenen Keil, was nicht nur das beschädigte Schilfrohr unverwendbar macht, sondern auch Funktionsstörungen dieser bekannten Vorrichtung zur Folge hat.

Es wurde weiters eine Vorrichtung zum Portionieren von im wesentlichen parallel ausgerichtetem Schilfrohr vorgeschlagen (AT-PS 320.502), bei welcher der Bodenteil einer Abstützung in eine nach unten ragende, lediglich im Bereich des Stirnendes der Abstützung angeordnete Führung mit einer der maximalen Stärke des Schilfrohres entsprechenden Breite übergeht, die von einem im wesentlichen U-förmigen Bügel geringer Länge gebildet ist, und aus der das Schilfrohr ausgezogen wird. Eine derartige bekannte Vorrichtung funktioniert jedoch bei geknicktem Schilfrohr nicht mehr einwandfrei, denn die zum Ausziehen erforderliche Zange verfehlt bei geknicktem Schilfrohr dieses bzw. beschädigt es. Ein Ausziehen mittels Walzen ist deshalb nachteilig, da bei kleinem Anpreßdruck der Walzen ein einwandfreier Abtransport insbesondere bei geknicktem Schilfrohr nicht gewährleistet ist und bei einem größeren Anpreßdruck das Schilfrohr zerquetscht wird.

Es ist weiters eine Einlegevorrichtung für Stroh bekannt (DE-PS 499.973), bei welcher ein Magazin für die Strohhülsen aus einem im Querschnitt rechteckigen Behälter besteht, der an einem Stirnende durch einen Verschlußschieber abgeschlossen ist, wobei nach dem Öffnen dieses Verschlußschiebers eine größere Anzahl von Strohhalmen mittels Greifer an den Stirnenden erfaßt und aus dem Magazin in Längsrichtung ausgezogen wird. Diese bekannte Vorrichtung kann für das Portionieren von Schilfrohr aus den oben angeführten Gründen nicht verwendet werden.

Die vorliegende Erfindung hat sich zur Aufgabe gestellt, eine Vorrichtung zum Zuführen von Schilfrohr zu einer Schilfrohrverarbeitungsmaschine zu schaffen, die auch dann in einwandfreier Weise funktioniert, wenn das Schilfrohr geknickt ist und in der Führung kreuz und quer durcheinander liegt und sich dadurch gegenseitig verhakt und das Ausziehen behindert. Zur Lösung dieser Aufgabe schlägt die Erfindung, ausgehend von einer Vorrichtung der eingangs beschriebenen Art, vor, daß der Entnahmeschlitz durch ein durch eine Antriebseinrichtung gesteuertes erstes Verschlußorgan abschließbar ist, daß der Portionierraum unten durch ein in seiner Schließstellung gehaltenes zweites Verschlußorgan abgeschlossen ist, und daß die Einrichtung zum Transportieren des Schilfrohres zur Schilfrohrverarbeitungsmaschine aus einer das Ende des Schilfrohres erfassenden, auf-und abbewegbaren ersten Klemmeinrichtung, bei deren Abwärtsbewegung das zweite Verschlußorgan in seine Offenstellung bewegt wird, und aus einer in etwa horizontaler Richtung bewegbaren zweiten Klemmeinrichtung besteht, die das durch die erste Klemmeinrichtung nach unten bewegte Schilfrohr seitlich aus der Abstützung herauszieht. Dadurch, daß der Portionierraum nicht das Schilfrohr entlang seiner ganzen Länge aufnimmt, sondern lediglich in einem kurzen Abschnitt, und daß jeweils immer ein Schilfrohr oder bei Schilfrohren kleinen Durchmessers maximal zwei Schilfrohre von diesem Portionierraum, der oben und unten durch die beiden Verschlußorgane abgeschlossen ist, aufgenommen ist bzw. sind, wird verhindert, daß beim Transport des sich in diesem Portionierraum befindlichen Schilfrohres zur Schilfrohrverarbeitungsmaschine weitere der sich in der Abstützung befindlichen Schilfrohre mitgerissen werden. Da das durch die erste Klemmeinrichtung erfaßte Ende des Schilfrohres zunächst einmal vom Portionierraum ausgehend nach unten bewegt wird, erfolgt eine weitgehende Trennung von den übrigen von der Abstützung aufgenommenen Schilfrohren, bevor dieses Schilfrohr durch die zweite Klemmeinrichtung seitlich aus der Abstützung herausgezogen und dadurch der Schilfrohr diese entgegen der Kraft der elastischen Mittel bzw. des Gewichtes geöffnet wird, nach einem Aufhören dieses Druckes jedoch sofort wieder in die Ruhelage zurückkehrt. Das Öffnen des ersten Verschlußorganes erfolgt durch entsprechende Steuerung erst dann, wenn das zweite, von der Klappe gebildete Verschlußorgan wieder geschlossen ist.

Zweckmäßig erweitert sich der Portionierraum vom Entnahmeschlitz ausgehend nach unten, so daß ein Verklemmen der Schilfrohre im Portionierraum verhindert wird.

Die Breite des Entnahmeschlitzes und/oder des Portionierraumes kann gemäß einem weiteren Merkmal der Erfindung durch Verstellen einer Begrenzungswand, beispielsweise mittels einer Gewindespindel, verändert und so rasch dem jeweiligen durchschnittlichen Rohrdurchmesser der zur Verarbeitung gelangenden Schilfrohre angepaßt werden, wobei eine solche Anpassung auch während des Betriebes der erfindungsgemäßen Vorrichtung erfolgen kann.

Es kann vorkommen daß während einer Arbeitsperiode kein Schilfrohr über den Entnahmeschlitz in den Portionierraum gelangt. Dieser Fall tritt entweder dann auf, wenn sich in der Abstützung kein Schilfrohr mehr befindet, somit ein Nachlegen eines Schilfrohrbündels erforderlich ist, oder wenn sich das in der Abstützung befindliche Schilfrohr trotz der vorgesehenen Rüttelvorrichtung verklemmt und daher nicht in den Portionierraum nachgefördert wird. Es muß dann dafür Sorge getragen werden, daß die Schilfrohrverarbeitungsmaschine so lange stillgesetzt wird, bis durch weitere Rüttelbewegungen die Zufuhr eines Schilfrohres zum Portionierraum erfolgt ist, da sonst beispielsweise bei der Herstellung von Schilfrohrmatten die die einzelnen Schilfrohre miteinander verbindenden Drähte verdrillt werden, ohne daß tatsächlich kein Schilfrohr zugeführt wurde. Aus diesem Grunde ist es von Vorteil, wenn das zweite Verschlußorgan mit einem Schaltorgan, vorzugsweise einem berührungslosen Sensor, zusammenwirkt, der im Steuerkreis der Schilfrohrverarbeitungsmaschine eingeschaltet ist. Da das zweite Verschlußorgan durch das mittels der ersten Klemmeinrichtung abwärts beförderte Schilfrohr verschwenkt wird, eine Verschwenkung somit trotz abwärtsbewegter erster Klemmeinrichtung unterbleibt, wenn im Portionierraum kein Schilfrohr vorhanden ist, das durch diese Klemmeinrichtung nach abwärts befördert wird, so ist die Betätigung dieses zweiten Verschlußorganes ein Anzeichen dafür, daß sich im Portionierraum ein Schilfrohr befand. Bei Ausbleiben einer solchen Bewegung wird daher die Schilfrohrverarbeitungsmaschine so lange stillgesetzt, wogegen der Antrieb der Rütteleinrichtung und des ersten Verschlußorganes und gegebenenfalls auch der Klemmeinrichtungen weiter erfolgt, so daß gegebenenfalls nach dem Einlegen eines neuen Schilfrohrbündels, schlußendlich Schilfrohr in den Portionierraum gelangt und von diesem mittels der ersten Klemmeinrichtung entnommen wird, wodurch das zweite Verschlußorgan geöffnet und damit die Schilfrohrverarbeitungsmaschine wieder in Betrieb gesetzt wird. Bei Verwendung eines berührungslosen Sensors werden Verzögerungen im Schaltvorgang vermieden, was bei den hohen Geschwindigkeiten, mit welchen die erfindungsgemäße Vorrichtung arbeitet, einen wesentlichen Vorteil darstellt.

Wenigstens eine, zweckmäßig beide der Klemmeinrichtungen sind mit in Abhängigkeit von ihrer hin- und hergehenden Bewegung gesteuerten Klemmbacken versehen, derart, daß in der einen Endstellung der jeweiligen Klemmeinrichtung ein Schließen und in der anderen Einstellung ein Öffnen der Klemmbacken erfolgt.

Zweckmäßig ist die Anordnung so getroffen, daß das erste Verschlußorgan, die Rütteleinrichtung und gegebenenfalls die erste Klemmeinrichtung durch eine gemeinsame Antriebseinrichtung, beispielsweise durch auf einer gemeinsamen Welle angeordnete Nocken, Zahnräder, Kurbeltriebe od.dgl., gesteuert bzw. angetrieben sind, so daß dadurch auf einfache Weise eine synchrone Bewegung dieser Teile sichergestellt ist.

Die zweite Klemmeinrichtung kann erfindungsgemäß entlang einer etwa horizontal verlaufenden Führung verschiebbar angeordnet sein, so daß die mittels dieser zweiten Klemmeinrichtung geförderten Schilfrohre in der gewünschten Weise der Schilfrohrverarbeitungsmaschine zugeführt werden.

Das Schilfrohr weist entsprechend seinem natürlichen Wuchs an seinen beiden Enden unterschiedlichen Durchmesser auf. Um ein gleichmäßiges Produkt mittels der Schilfrohrverarbeitungsmaschine herzustellen, ist es daher bekannt, in diese das Schilfrohr alternierend derart einzulegen, daß jeweils ein Schilfrohrende größeren Durchmessers einem Schilfrohrende kleineren Durchmessers benachbart ist. Dies kann auf einfache Weise dadurch erzielt werden, daß an in Schilfrohrlängsrichtung gegenüberliegenden Seiten der Schilfrohrverarbeitungsmaschine Abstützungen mit den dazugehörigen Einrichtungen zum Zuführen des Schilfrohres vorgesehen sind, welche Einrichtungen alternierend betätigbar sind.

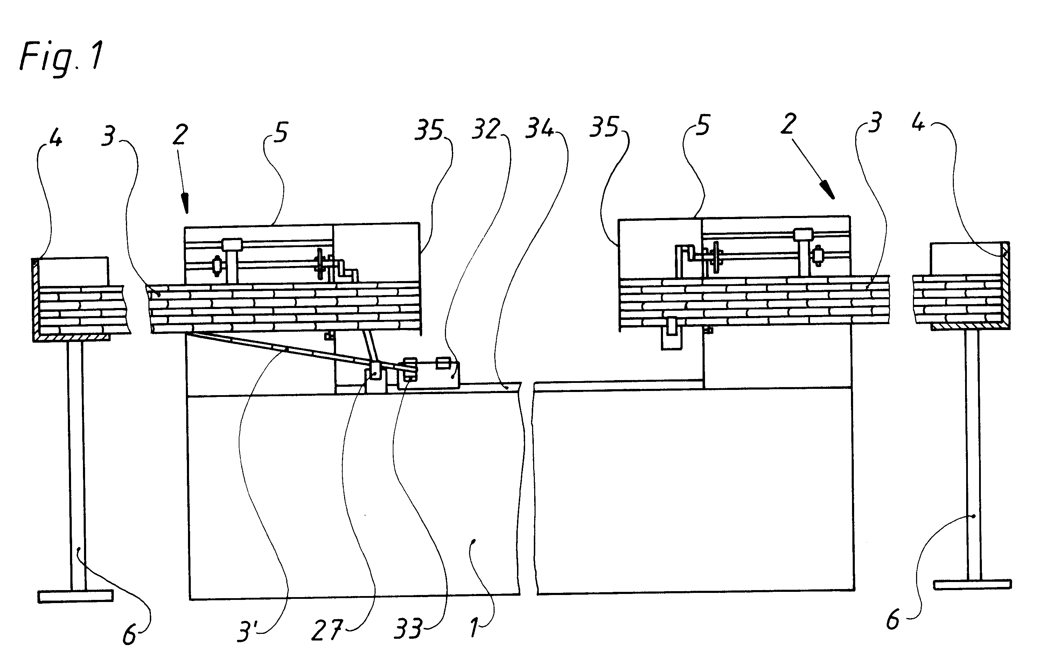

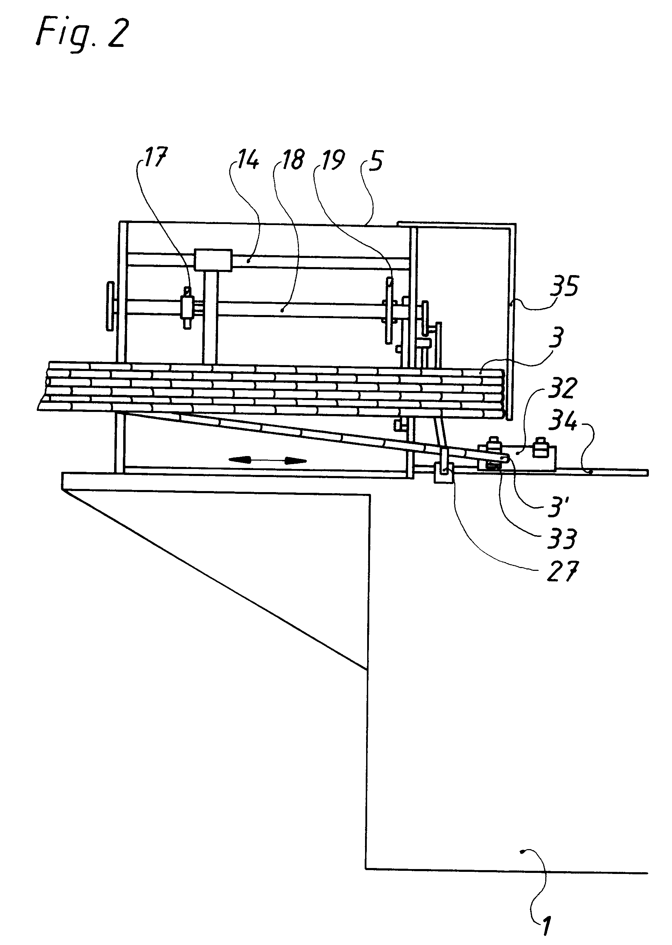

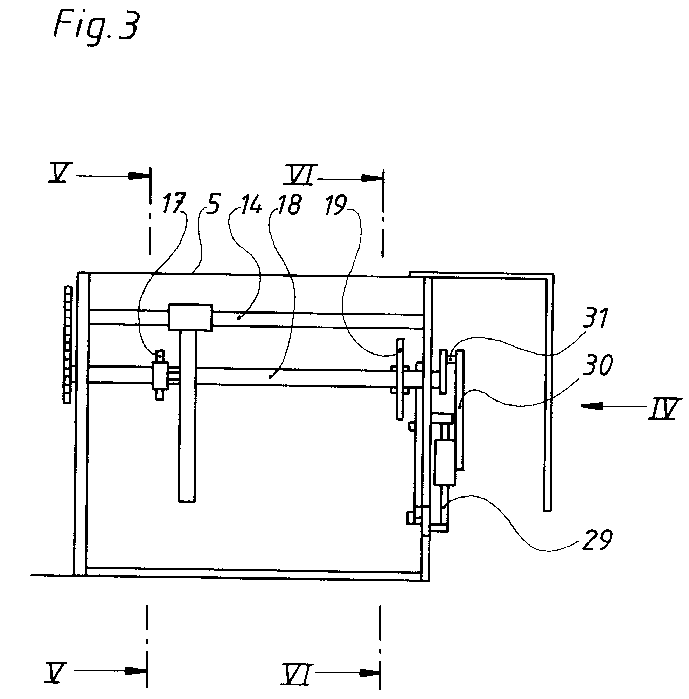

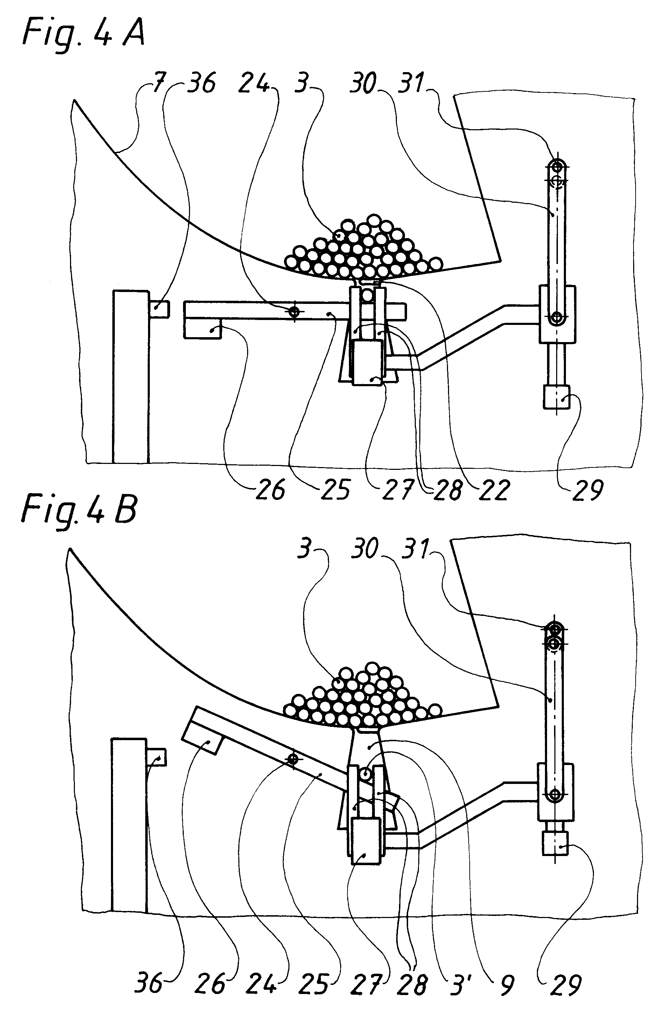

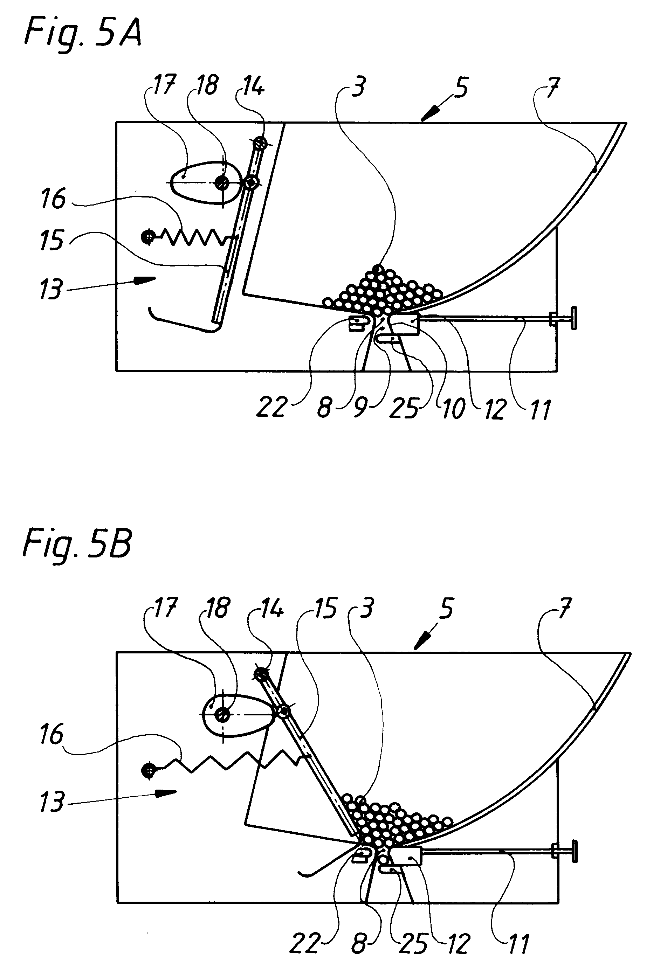

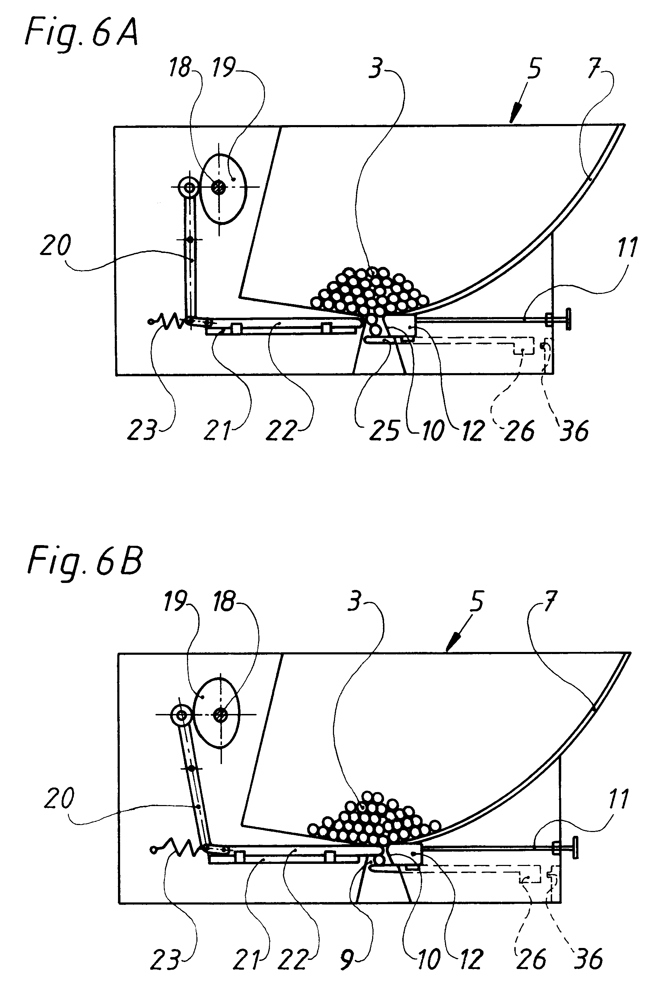

In der Zeichnung ist die Erfindung anhand eines Ausführungsbeispieles schematisch veranschaulicht. Fig.1 zeigt einen Längsschnitt durch eine erfindungsgemäße Vorrichtung. Fig.2 stellt den vorderen Teil der Abstützung für das Schilfrohr im Schnitt in größerem Maßstab dar. Fig.3 zeigt ein den Antrieb betreffendes Detail der erfindungsgemäßen Vorrichtung. Die Fig.4A und 4B zeigen eine Ansicht in Richtung des Pfeiles IV in Fig.3, wobei ein Schilfrohr während der Entnahme aus der Abstützung in verschiedenen Phasen dargestellt ist. Die Fig.5A und 5B sowie 6A und 6B zeigen Schnitte nach den Linien V-V und VI-VI in Fig.3, wobei gleichfalls verschiedene Phasen dargestellt sind.

In den Fig.1 und 2 ist eine bekannte Schilfrohrverarbeitungsmaschine 1 beispielsweise für die Herstellung von Schilfrohrmatten lediglich schematisch dargestellt. Das dieser Maschine einzeln zugeführte Schilfrohr wird hiebei durch Drahtschlingen miteinander verbunden. Wie aus Fig.1 hervorgeht, sind an gegenüberliegenden Seiten der Schilfrohrverarbeitungsmaschine 1 Abstützungen 2 vorgesehen, in welchen das Schilfrohr 3 bündelweise angeordnet ist. Das Schilfrohr 3 liegt hiebei zwar ausgerichtet in diesen Abstützungen 2, weist jedoch häufig Knicke und Seitentriebe auf, so daß bei der Entnahme dafür Sorge getragen werden muß, daß sich die einzelnen Schilfrohre nicht verhaken.

Jede Abstützung besteht aus zwei in Schilfrohrlängsrichtung beabstandeten Teilen, nämlich aus einem Teil 4, der das hintere Ende des Schilfrohres aufnimmt, und aus einem vorderen Teil 5, aus welchem die Entnahme der einzelnen Schilfrohre erfolgt. Zwischen den beiden Teilen 4,5 ist das Schilfrohr nicht abgestützt.

Die Lage des Teiles 4 ist entsprechend der Länge des zu verarbeitenden Schilfrohres veränderbar. Hiezu ist der Teil 4 auf einfache Weise über einen Fuß 6 von den übrigen Teilen der Vorrichtung gesondert am Boden abgestützt.

Wie aus den Fig.4 bis 6 hervorgeht, ist der vordere Teil 5 der Abstützung von einer konkav verlaufenden Wand 7 begrenzt, in deren Bodenbereich sich ein Entnahmeschlitz 8 befindet, der sich nach unten in einen Portionierraum 9 fortsetzt, der sich nach unten erweitert, wodurch ein Steckenbleiben des im Portionierraum befindlichen Schilfrohres 3 verhindert wird. Eine Begrenzungswand 10 des Portionierraumes 9 ist verstellbar, wodurch die Breite des Entnahmeschlitzes 8 verändert und dem Durchmesser des jeweils zu verarbeitenden Schilfrohres 3 angepaßt werden kann. Hiezu ist diese Begrenzungswand 10 Teil eines durch eine Gewindespindel 11 verschiebbaren Schlittens 12.

Damit die Schilfrohre 3 nacheinander über den Entnahmeschlitz 8 in den Portionierraum 9 gefördert werden, ist, wie aus Fig.5A und 5B hervorgeht, im Bereich des den Entnahmeschlitz 8 aufweisenden Teiles 5 der Abstützung 2 eine Rütteleinrichtung 13 vorgesehen. Diese Rütteleinrichtung besteht aus einem um eine Achse 14 schwenkbar gelagerten Hebel 15, der durch eine Feder 16 an eine Nocke 17 angedrückt wird, die mit einer Welle 18 drehfest verbunden ist. Dadurch führt der Schwenkhebel 15, wie aus den Fig.5A und 5B hervorgeht, eine oszillierende Bewegung aus, wodurch das Schilfrohr über den Entnahmeschlitz 8 in den Portionierraum 9 gefördert wird.

Mit der Welle 18 ist, wie aus den Fig.6A und 6B hervorgeht, eine weitere Nocke 19 drehfest verbunden, die über ein Hebelgestänge 20 einen in einer Führung 21 geführten Schieber 22 betätigt, der ein erstes Verschlußorgan für den Entnahmeschlitz 8 bildet. Durch die Drehbewegung der Welle 18 und damit der Nocke 19 wird über das mittels einer Feder 23 an die Nocke 19 angedrückte Hebelgestänge der Schieber 22 betätigt, welcher somit den Entnahmeschlitz abwechselnd öffnet oder schließt, wie dies aus den Fig.6A und 6B erkennbar ist.

Der Portionierraum 9 ist unten durch eine um eine Achse 24 schwenkbare Klappe 25 verschlossen, die, wie aus Fig.4A hervorgeht, durch ein Gewicht 26 derart belastet ist, daß die Klappe 25 in der Schließstellung gehalten ist. Anstelle des Gewichtes 26 kann auch eine Feder vorgesehen sein. Die Klappe 25 bildet somit ein zweites Verschlußorgan für den Portionierraum 9. In seitlichem Abstand von der Klappe 25 befindet sich eine erste Klemmeinrichtung 27 mit Backen 28, die beispielsweise pneumatisch, und zwar synchron zur Bewegung der Welle 18, geöffnet oder geschlossen werden können. Diese Klemmeinrichtung 27 ist entlang einer Führung 29 auf- und abbewegbar, wobei die Bewegung mittels eines Gestänges 30 über einen Kurbeltrieb 31 erfolgt, der, wie aus Fig.3 hervorgeht, gleichfalls über die Welle 18 angetrieben ist, so daß eine synchrone Bewegung zwischen der ersten Klemmeinrichtung 27 und dem das erste Verschlußorgan bildende Schieber 22 sichergestellt ist.

Bei der Abwärtsbewegung der ersten Klemmeinrichtung 27 wird durch das nach unten bewegte Schilfrohr 3' die schwenkbare Klappe 25 entgegen der vom Gewicht 26 ausgeübten Kraft verschwenkt, wie dies aus Fig.4B hervorgeht, so daß eine Entnahme eines Schilfrohres 3' aus dem Portionierraum 9 möglich ist. Anschließend kehrt die Klappe 25 durch die Gewichtsbelastung wieder in die Schließstellung zurück.

In der unteren Endstellung der ersten Klemmeinrichtung 27 weist das aus dem Portionierraum 9 entnommene Schilfrohr 3' eine Lage auf, wie sie in den Fig.1 und 2 dargestellt ist. In dieser Lage wird das Ende des Schilfrohres 3' durch eine zweite Klemmeinrichtung 32 erfaßt, welche gleichfalls Klemmbacken 33 aufweist. Gleichzeitig werden die Klemmbacken 28 der ersten Klemmeinrichtung 27 geöffnet.

Die zweite Klemmeinrichtung 32 ist entlang einer im wesentlichen horizontal verlaufenden Führung 34 mittels eines hochdynamischen Linearantriebes verschiebbar, wodurch das Schilfrohr 3' aus dem Schilfrohrbündel herausgezogen und einem nicht dargestellten Trichter der Schilfrohrverarbeitungsmaschine 1 zugeführt wird, von welchem die Weiterverarbeitung in an sich bekannter Weise erfolgt.

Bei diesem Herausziehen des Schilfrohres 3' besteht die Gefahr, daß auch die übrigen in der Abstützung 2 befindlichen Schilfrohre in ihrer Längsrichtung bewegt werden, da sich ja das Schilfrohr 3' im Bereich des Teiles 4 der Abstützung 2 noch zwischen den übrigen Schilfrohren befindet und sich dort verhaken kann. Um eine solche Bewegung der übrigen Schilfrohre beim Herausziehen des Schilfrohres 3' mit Sicherheit zu vermeiden, ist der den Entnahmeschlitz 8 aufweisende Teil der Abstützung 5 in Abstand von seiner Stirnseite mit einem beispielsweise von einem Blech bestehenden Anschlag 35 versehen, dessen unteres Ende so angeordnet ist, daß das von der ersten Klemmeinrichtung 27 abwärts bewegte Schilfrohr 3' von der zweiten Klemmeinrichtung 32 erfaßt und ausgezogen werden kann, die übrigen in der Abstützung 2 befindlichen Schilfrohre jedoch zurückgehalten werden.

Wie bereits erwähnt, sind - in Schilfrohrlängsrichtung gesehen -zu beiden Seiten der Schilfrohrverarbeitungsmaschine 1 Abstützungen 2 mit den dazugehörigen Einrichtungen vorgesehen, welche abwechselnd betätigt werden. Die Schilfrohre 3 sind hiebei in die beiden Abstützungen 2 so eingelegt, daß entweder die Schilfrohrenden kleineren Durchmessers oder die Schilfrohrenden größeren Durchmessers einander zugewendet und von den Klemmeinrichtungen 27,32 erfaßt werden, wodurch sichergestellt ist, daß die dem Trichter der Schilfrohrverarbeitungsmaschine 1 nacheinander zugeführten Schilfrohre eine unterschiedliche Ausrichtung aufweisen und daher die Durchmesserdifferenz der Schilfrohre an ihren beiden Enden ausgeglichen und ein formschönes Produkt erzielt wird. Außerdem erfolgt durch diese Anordnung eine Beschleunigung des Arbeitsvorganges.

Die erfindungsgemäße Vorrichtung arbeitet wie folgt:

Zunächst wird ein Schilfrohrbündel, dessen Zusammenhalt natürlich gelöst wird, so daß die Schilfrohre einzeln entnommen werden können, in beide Abstützungen 2 eingelegt, worauf eine Inbetriebsetzung der Vorrichtung erfolgt. Hiebei wird durch den Antrieb der Welle 18 einerseits der die Rütteleinrichtung bildende Schwenkhebel 15 betätigt, so daß, unterstützt durch die konkave Ausbildung der Wand 7, ein Schilfrohr 3 über den Entnahmeschlitz 8 in den Portionierraum 9 gelangt. Bei der Weiterdrehung der Welle 18 wird durch den Schieber 22 der Entnahmeschlitz 8 verschlossen, so daß nun ein Schilfrohr im Portionierraum 9 eingeschlossen ist. Dieses Schilfrohr wird nahezu gleichzeitig durch die erste Klemmeinrichtung 27 erfaßt und mittels des gleichfalls von der Welle 18 betätigten Kurbeltriebes 31 nach unten bewegt, wobei die den Portionierraum 9 abschließende Klappe 25 verschwenkt wird. Diese Klappe 25 wirkt nun mit einem berührungslosen Sensor 36 (siehe Fig.4A, 4B) zusammen, der im Steuerkreis der Schilfrohrverarbeitungsmaschine eingeschaltet ist. Befindet sich kein Schilfrohr im Portionierraum 8, beispielsweise weil die Aufnahme 5 leer ist oder weil sich Schilfrohr verklemmt hat und daher nicht in den Portionierraum 8 gelangt, so erfolgt eine Leerbewegung der ersten Klemmeinrichtung 27 nach unten, ohne daß eine Verschwenkung der Klappe 25 erfolgt, so daß auch der Sensor 36 nicht anspricht. Dadurch wird die Schilfrohrverarbeitungsmaschine stillgesetzt, so daß ein Weiterarbeiten derselben, wenn keine Zufuhr von Schilfrohr erfolgt, verhindert wird. Die Welle 18 dreht sich jedoch weiter, so daß eine ununterbrochene Betätigung der Rüttelvorrichtung 13, des Schiebers 22 und der ersten Klemmeinrichtung 27 erfolgt, so daß, gegebenenfalls nach dem Befüllen der Abstützung mit Schilfrohr, eine Zufuhr eines Schilfrohres über den Entnahmeschlitz 8 in den Portionierraum 9 sichergestellt ist, das von der ersten Klemmeinrichtung 27 nach unten gezogen wird, wodurch wieder die Klappe 25 und damit der Sensor 35 betätigt werden und ein Einschalten der Schilfrohrverarbeitungsmaschine stattfindet.

Die gesamte erfindungsgemäße Vorrichtung ist programmgesteuert. Die Länge der Linearbewegung der zweiten Klemmeinrichtung 32 entlang der Führung 34 kann mittels eines Wahlschalters eingestellt und somit an die Länge des zu verarbeitenden Schilfrohres angepaßt werden. Weiters ist eine Einrichtung vorgesehen, die die gesamte Vorrichtung zusammen mit der Schilfrohrbearbeitungsmaschine stillsetzt, wenn die hergestellte Schilfmatte od. dgl. eine vorgegebene Länge aufweist.

## Patentansprüche

1. Vorrichtung zum Zuführen von im wesentlichen parallel ausgerichtetem Schilfrohr zu einer Schilfrohrverarbeitungsmaschine, beispielsweise einer Maschine für die Herstellung von Schilfrohrmatten, mit wenigstens einer aus zwei in Schilfrohrlängsrichtung beabstandeten Teilen (4,5) bestehenden Abstützung (2) für ein Schilfrohrbündel, von welchen Teilen (4,5) einer im Bodenbereich einen Entnahmeschlitz (8) für einzelne Schilfrohre aufweist, der sich in einen nach unten gerichteten Portionierraum (9) fortsetzt, und mit einer Einrichtung (27,32) zum Transportieren einzelner Schilfrohre zur Schilfrohrverarbeitungsmaschine (1), dadurch gekennzeichnet, daß der Entnahmeschlitz (8) durch ein durch eine Antriebseinrichtung gesteuertes erstes Verschlußorgan (22) abschließbar ist, daß der Portionierraum (9) unten durch ein in seiner Schließstellung gehaltenes zweites Verschlußorgan (25) abgeschlossen ist, und daß die Einrichtung zum Transportieren der Schilfrohre (3) zur Schilfrohrverarbeitungsmaschine (1) aus einer das Ende des Schilfrohres (3') erfassenden, auf- und abbewegbaren ersten Klemmeinrichtung (27), bei dessen Abwärtsbewegung das zweite Verschlußorgan (25) in seine Offenstellung bewegt wird, und aus einer in etwa horizontaler Richtung bewegbaren zweiten Klemmeinrichtung (32) besteht, die das durch die erste Klemmeinrichtung (27) nach unten bewegte Schilfrohr (3') seitlich aus der Abstützung (2) herauszieht.

2. Vorrichtung nach Anspruch 1, dadurch gekennzeichnet, daß der den Entnahmeschlitz (8) aufweisende Teil (5) der Abstützung (2) von einer konkav verlaufenden Wand (7) begrenzt ist.

3. Vorrichtung nach Anspruch 1 oder 2, dadurch gekennzeichnet, daß im Bereich des den Entnahmeschlitz (8) aufweisenden Teiles (5) der Abstützung (2) eine Rütteleinrichtung (13) vorgesehen ist.

4. Vorrichtung nach Anspruch 3, dadurch gekennzeichnet, daß die Rütteleinrichtung (13) aus einem durch eine Antriebseinrichtung, insbesondere oszillierend, verschwenkbaren Schwenkhebel (15) besteht.

5. Vorrichtung nach einem der Ansprüche 1 bis 4, dadurch gekennzeichnet, daß der den Entnahmeschlitz (8) aufweisende Teil (5) der Abstützung (2) mit einem oberhalb des zweiten Verschlußorganes (25) angeordneten Anschlag (35) für die stirnseitigen Enden der in diesem Teil (5) der Abstützung (2) befindlichen Schilfrohre (3) versehen ist.

6. Vorrichtung nach einem der Ansprüche 1 bis 5, dadurch gekennzeichnet, daß das erste Verschlußorgan für den Entnahmeschlitz (8) aus einem durch eine Antriebseinrichtung betätigbaren Schieber (22) besteht.

7. Vorrichtung nach einem der Ansprüche 1 bis 6, dadurch gekennzeichnet, daß das zweite Verschlußorgan für den Portionierraum (9) aus einer schwenkbaren Klappe (25) besteht, die durch elastische Mittel, vorzugsweise eineFeder, oder durch ein Gewicht (26), in ihrer Schließstellung gehalten ist.

8. Vorrichtung nach einem der Ansprüche 1 bis 7, dadurch gekennzeichnet, daß sich der Portionierraum (9) vom Entnahmeschlitz (8) ausgehend nach unten erweitert.

9. Vorrichtung nach einem der Ansprüche 1 bis 8, dadurch gekennzeichnet, daß die Breite des Entnahmeschlitzes (8) und/oder des Portionierraumes (9) durch Verstellen einer Begrenzungswand (10), beispielsweise mittels einer Gewindespindel (11), veränderbar ist.

10. Vorrichtung nach einem der Ansprüche 1 bis 9, dadurch gekennzeichnet, daß das zweite Verschlußorgan (25) mit einem Schaltorgan, vorzugsweise mit einem berührungslosen Sensor (36), zusammenwirkt, der im Steuerkreis der Schilfrohrverarbeitungsmaschine (1) eingeschaltet ist.

11. Vorrichtung nach einem der Ansprüche 1 bis 10, dadurch gekennzeichnet, daß wenigstens eine der Klemmeinrichtungen (27,32) mit in Abhängigkeit von ihrer Bewegung gesteuerten Klemmbacken (28,33) versehen ist.

12. Vorrichtung nach einem der Ansprüche 1 bis 11, dadurch gekennzeichnet, daß das erste Verschlußorgan (22), die Rütteleinrichtung (13) und gegebenenfalls die erste Klemmeinrichtung (27) durch eine gemeinsame Antriebseinrichtung, beispielsweise durch auf einer gemeinsamen Welle (18) angeordnete Nocken (17,19), Zahnräder, Kurbeltriebe (31) od.dgl. gesteuert bzw. angetrieben sind.

13. Vorrichtung nach einem der Ansprüche 1 bis 12, dadurch gekennzeichnet, daß die zweite Klemmeinrichtung (32) entlang einer etwa horizontal verlaufenden Führung (34) verschiebbar angeordnet ist.

14. Vorrichtung nach einem der Ansprüche 1 bis 13, dadurch gekennzeichnet, daß an in Schilfrohrlängsrichtung gegenüberliegenden Seiten der Schilfrohrverarbeitungsmaschine (1) Abstützungen (2) mit den dazugehörigen Einrichtungen zum Zuführen des Schilfrohres vorgesehen sind, welche Einrichtungen alternierend betätigbar sind.
